Europäisches Patentamt

European Patent Office

Office européen des brevets

(11) Publication number: **0 069 545**
A2

# EUROPEAN PATENT APPLICATION

(21) Application number: 82303462.4

(22) Date of filing: 01.07.82

(51) Int. Cl.³: **G 11 B 25/10**
G 11 B 23/50, G 11 B 5/48
G 11 B 17/02, G 11 B 1/00

(30) Priority: 02.07.81 US 280261

(43) Date of publication of application:
12.01.83 Bulletin 83/2

(84) Designated Contracting States:
DE FR GB IT

(71) Applicant: Irwin International, Inc.
2000 Green Road
Ann Arbor Michigan(US)

(72) Inventor: Butsch, Otto R.
3401 Hill Canyon
Thousand Oaks California(US)

(74) Representative: Robinson, Anthony John
Metcalf et al,
Kilburn & Strode 30 John Street
London, WC1N 2DD(GB)

(54) Disc recorder with integral cartridge tape module.

(57) A disc recorder includes a main support frame (12) and a cover (14) sealed to the frame to define an enclosure (29). A disc drive (108, 112) mounted to the frame rotates a disc hub (118) to which a hard disc media (20) is secured. Disc read/write heads (24) are positioned by an arm (26) and an arm drive (28) supported by the main frame. A main filter plenum (90) is secured to the frame which defines inlet (52) and outlet (56) apertures. A filter (92) is disposed within the plenum. An impeller on the underside of the disc hub includes a plurality of vanes (134). A cross ambient filter (160) communicates the enclosure with atmosphere for balancing the pressure within the enclosure with atmospheric pressure. A self-contained, modular cartridge recorder (18) is secured to the support frame.

Fig. 1.

## DISC RECORDER WITH INTEGRAL
## CARTRIDGE TAPE MODULE

This invention relates to random access storage systems and more particularly to a hard disc recorder with tape backup.

Heretofore, a variety of recorder systems have been proposed for small business computers, data processing and word processing apparatus. Storage may be provided by floppy disc recorders and/or hard disc recorders. Presently available hard disc drives do not provide the necessary storage in a compact, readily integrated system. Such disc drives typically include a sealed, nonremovable rigid disc media. This requires a removable media backup system. Heretofore, the backup systems have been separate units of either the floppy disc or cartridge tape drive type. Further, hard disc drives have required significantly more space than the industry standard mini-floppy disc drives.

Typical hard disc drives include a disc hub, a motor for rotating the disc hub, a hard disc media clamped to the hub and a read/write head assembly. Such heads are usually aerodynamic heads which "fly" above and below the disc media. Provision is made for positioning the arm on the disc. The hard disc is mounted within an enclosure which is essentially sealed from atmosphere. It is important that contaminants, such as dust and the like, not enter the enclosure or be allowed to settle on the disc media. Provision, therefore, must be made for ensuring a flow of air across and around the disc media during drive operation. Prior systems have included an impeller rotated with the disc hub which passes air across the disc surface and through a filter material.

According to one aspect of the present invention, an integrated dual data storage device having both rigid disc recording media and a cartridge tape media comprises: a main support frame; a rotary disc drive means supported on said frame; a disc drive hub carrying a rigid disc recording media and coupled to said disc drive for rotation thereby; a read/write head assembly including a support arm; a head positioner means supported on said frame and connected to said support arm for moving said head assembly from one selected position to another; said main frame having support structure located and dimensioned to accurately position said disc media and said read/ write head; a cover sealed to said frame and enclosing said disc media; and a cartridge tape recorder having a cartridge-mounting frame supported upon said main frame, said cartridge recorder including a read/write head, a rotary tape drive member and a drive means operatively connected to said rotary tape drive member for rotatably driving said member; said main frame, cover, disc assembly and head assembly, and said cartridge recorder together defining a compact, integrated self-supporting unit; said main support frame having means for mounting the integrated unit upon external support means.

According to a second aspect of the present invention, a disc recorder comprises a main support frame having a transverse portion defining a bottom surface and a top surface, said support frame defining a disc spindle support and spaced filter inlet and filter outlet apertures opening through said top and bottom surfaces; a disc hub; a spindle and drive means carried on said support frame for rotating said disc hub; a cover sealed to said frame, said cover having an inner surface facing said top surface and in conjunction therewith defining an enclosure within which said disc hub rotates; a filter plenum connecting said apertures; a filter disposed within said plenum; impeller vanes on said disc hub positioned to sweep adjacent said filter outlet aperture, said disc hub having at least one through-passage disposed so that said impeller will force air from the outer periphery of said disc hub generally radially inwardly and through said through-passage to the top of the disc hub, said air flowing in a generally spiral-shaped pattern outwardly from the centre of the hub and to said filter inlet aperture; a plurality of superimposed ribs extending generally radially outwardly with respect to the centre portion of the disc hub, said ribs being located on said top surface and said cover inner surface, said ribs extending above and below said disc hub to concentrate and layer said flow of air close to the surface of a rigid disc media carried on and rotating with said hub.

According to a third aspect of the present invention, a hard disc recorder includes a main support frame defining a generally transverse support plane having an upper surface, a cover sealed to said frame to define an enclosure, disc drive means including a disc hub supporting a disc media and mounted to said frame for rotating said hard disc media within said enclosure, disc read/write heads and head-positioner arm means within said enclosure for moving said heads across said disc, and is characterised by: a main filter plenum supported by said frame, said frame defining spaced inlet and outlet apertures opening through said support plane and into said plenum; filter material within said plenum and between said inlet and outlet apertures; an impeller on an underside of said disc hub, said impeller including a plurality of vanes configured to move air inwardly towards the centre of said disc hub, said hub defining a plurality of openings extending therethrough for transferring air from beneath the disc to the top of the disc; and cross-ambient filter means communicating said enclosure with atmosphere for balancing the pressure within said enclosure with atmospheric pressure.

According to a fourth aspect of the present invention, a tape drive for a cartridge recorder comprises: a frame; a drive motor having an output mounted on said frame; an elongated arm; shaft means for rotatably mounting one end of said arm to said frame; capstan means including a capstan shaft rotatably mounted on another end of said arm for engaging a tape and driving same; spring means on said frame for biasing said arm towards a front face of said frame; and belt and pulley means for operatively connecting said drive motor output to said capstan shaft.

The invention may be carried into practice in various ways but one recorder embodying the invention will now be described by way of example, with reference to the accompanying drawings, in which:

Figure 1 is a perspective, exploded view of the modular recorder in accordance with the present invention;

Figure 2 is a top, plan view of the main support frame;

Figure 3 is a bottom, plan view of the cover;

Figure 4 is a cross-sectional view taken generally along line IV-IV of Figure 3;

Figure 5 is a cross-sectional view taken generally along line V-V of Figure 2;

Figure 6 is a fragmentary, top, plan view of the recorder;

Figure 7 is a fragmentary, bottom plan view of the main support frame;

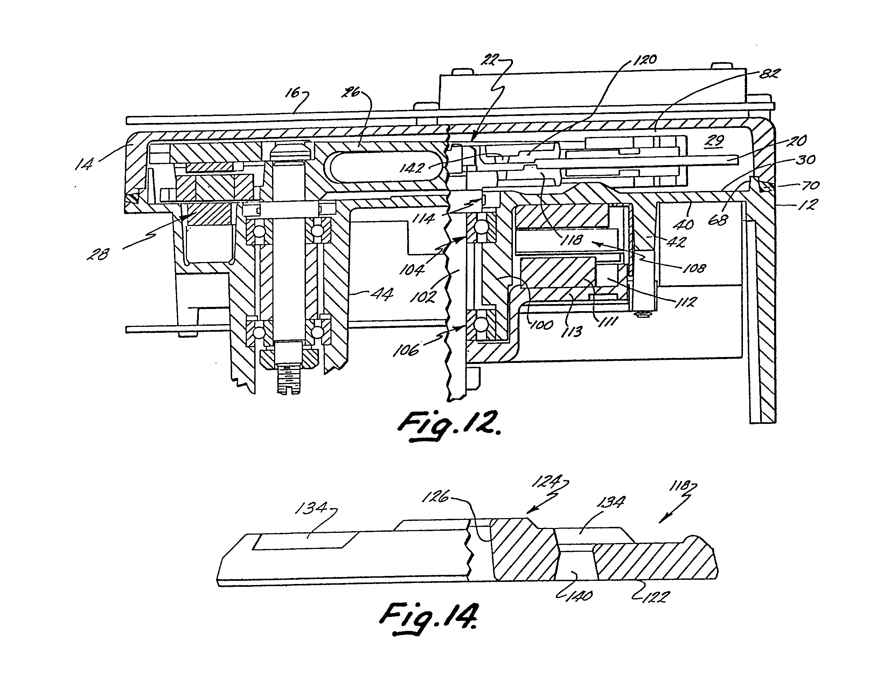

Figure 8 is a cross-sectional view taken generally along line VIII-VIII of Figure 7;

Figure 9 is a cross-sectional view taken generally along line IX-IX of Figure 7;

Figure 10 is a fragmentary, bottom perspective view of the recorder;

Figure 11 is a fragmentary, cross-sectional view taken generally along line XI-XI of Figure 6;

Figure 12 is a cross-sectional view of the recorder;

Figure 13 is a bottom plan view of the disc hub casting;

Figure 14 is a cross-sectional view taken generally along line XIV-XIV of Figure 13;

Figure 15 is a top, plan view of the disc hub after machining;

Figure 16 is a cross-sectional view taken generally along line XVI-XVI of Figure 15;

Figure 17 is a schematic, partially sectioned side elevational view of the recorder;

Figure 18 is a schematic, partially sectioned side elevational view of the recorder showing the air flow path;

Figure 19 is a front, elevational view of the cartridge tape recorder;

Figure 20 is a plan view of the cartridge recorder;

Figure 21 is an enlarged, side elevational view of the cartridge tape drive;  and

Figure 22 is an enlarged, plan view of the cartridge tape drive.

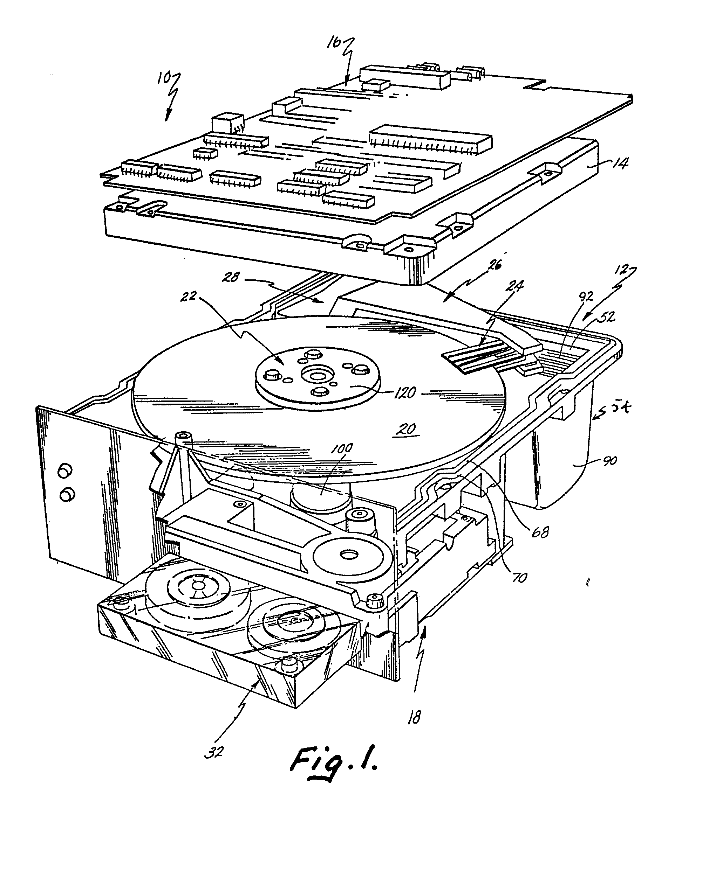

A preferred embodiment of a recorder in accordance with the present invention is illustrated in Figure 1 and generally designated 10. The recorder 10 includes a main support frame 12, a cover 14 which supports a device control and interface circuit board 16 and a modular, self-contained cartridge recorder 18.

Supported on the main support frame 12 is a hard disc media 20. The disc media 20 is secured to a central disc hub 22. Also supported on main frame 12 are a pair of aerodynamic read/write heads 24. Heads 24 "fly" on the disc media 20 and are positioned by a support arm 26 and head positioner motor 28. The device, therefore, includes a hard disc recording media which is sealed within an enclosure 29 defined by the cover 14 and a top surface 30 of frame 12 (Figure 12).

The unit also includes the integral and modular cartridge recorder 18 which employs a conventional type cartridge 32. Unit 18 provides a removable cartridge tape backup for the disc media. The entire format and capacity of the disc media can be dumped onto one cartridge 32. The cartridge is a readily available item, such as a 3-M DC 100A cartridge or a Verbatim TC-150 data cartridge. The entire unit is dimensioned to match the industry standard mini-floppy disc recorder. The unit has dimensions of 82.5 x 146 x 203 mm. The compactness of the unit results from the small size of the disc media 22 which has a 130 mm OD and a 40 mm ID. The cartridge deck or recorder 18, as discussed in more detail below, is of a low profile configuration. Further, the positioning system or head positioner motor 28 is part of the head arm assembly. This eliminates the bulky stepper motors which have heretofore been employed.

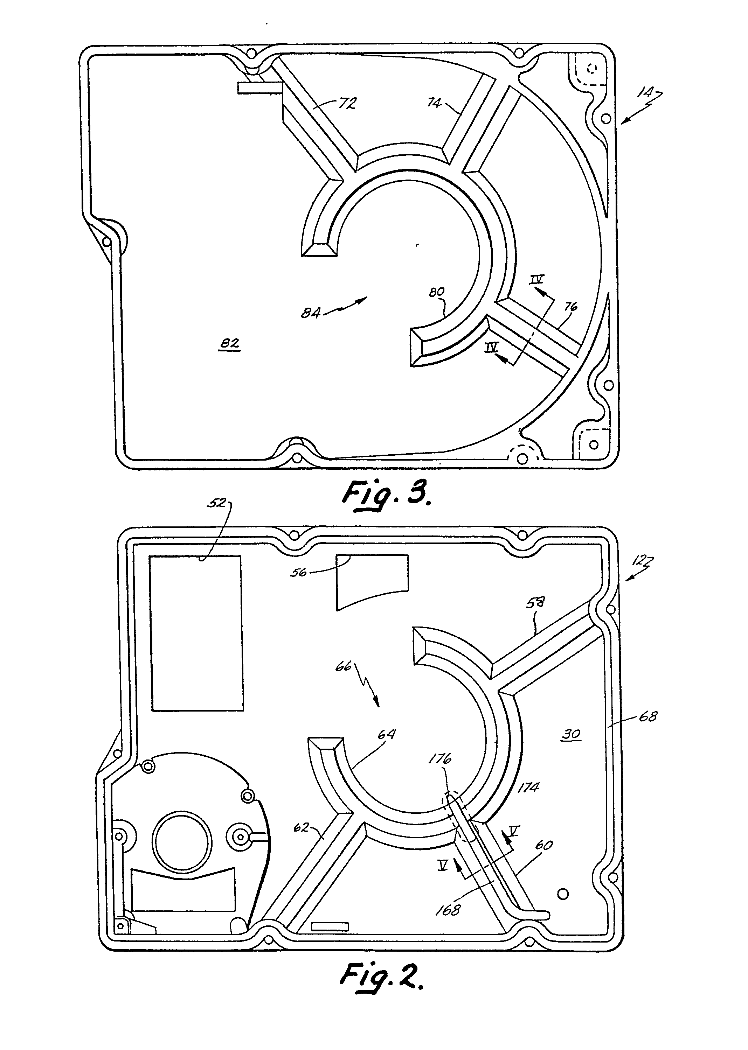

As seen in Figures 2, 7, 10 and 12, the main support frame 12 is preferably a die cast member. Casting 12 defines an upper, generally rectangular surface 30 which faces the hard disc media 20. The casting also defines an undersurface 40 from which a generally circular hub 42 extends. Hub 42, as explained in more detail below, forms part of the spindle motor or drive system for the recorder. Main support frame 12 also defines another circular hub portion 44 which receives the head positioner motor 28. Main frame 12 further defines reinforcing ribs 46 and mounting bosses 48 to which the cartridge recorder 18 is secured.

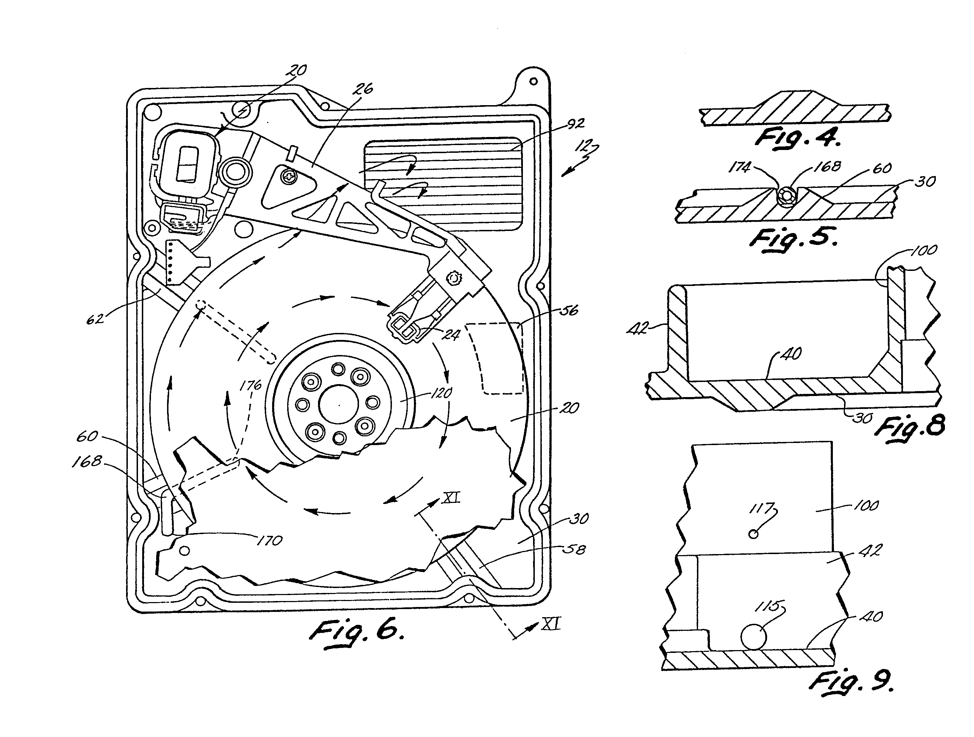

As seen in Figure 2, upper surface 30 of frame 12 defines a rectangular cutout or aperture 52. Aperture 52 serves as an inlet to a main air filter generally designated 54 in Figure 1. Surface 30 defines another aperture 56 which is spaced from aperture 52. As seen in Figure 6, aperture 56 is swept by the hard disc recording media 20. Surface 30 further defines a plurality of rib structures 58, 60, 62 and 64. Ribs 58, 60 and 62 extend generally radially of the disc drive 22. Each of these ribs has a generally inverted, truncated V shape in cross section. The ribs extend from the sides of the frame inwardly to rib structure 64. Rib structure 64 is generally circular in plan and defines an enlarged cutout area 66. Rib 64 also has a truncated V shape in cross section. Frame 12 defines a skirt 68 which extends around its entire upper periphery. The periphery of frame 12 supports a seal 70 (Figure 1) against which cover 14 is sealingly clamped.

As seen in Figure 3, cover 14 also defines a plurality of rib elements 72, 74, 76 and 80. These ribs have the same configuration and dimensions as the corresponding ribs defined by the main support frame 12. When the cover, which has an inner surface 82, is positioned on the main support frame, ribs 72, 74 and 76 are superimposed on ribs 58, 60, 62 (Figure 11). A cutout portion 84 of circular rib 80 is also positioned directly above cutout portion 66 of rib 64. As explained in more detail below, the rib structures serve to guide air which is passing over the disc media. The ribs act as baffles which maintain air entering the area close to the top side of the disc media and to spread the air out in a layer. The matching ribs defined by the main support frame and cover tend to "squeeze" a film of air down onto the top of the disc. Before the air film or layer can become too disruptive or turbulent, it will encounter the next succeeding pair of ribs. The ribs also prevent standing waves or beat frequencies from developing in the air pressure patterns on the top of the disc recording media.

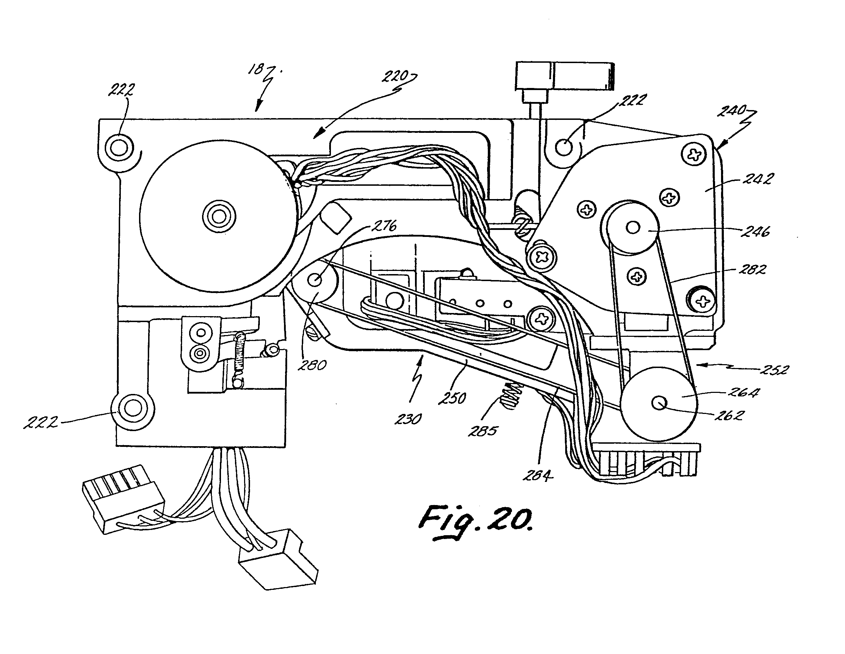

As seen in Figure 10, an air filter plenum 90 is secured to the undersurface of the main support frame 12. Plenum 90 is dimensioned and positioned so that filter inlet and outlet apertures 52, 56 open into the plenum structure. As seen in Figures 1 and 6, a filter media 92 having a generally accordian configuration, is positioned within the plenum at the inlet aperture 52. This is also schematically illustrated in Figure 18. Filter 92 is preferably an HEPA filter having 95% efficiency on .3 $\mu$m particles. As explained below, the filter media filters out contaminants from air flowing within the enclosure defined by the cover and main support frame.

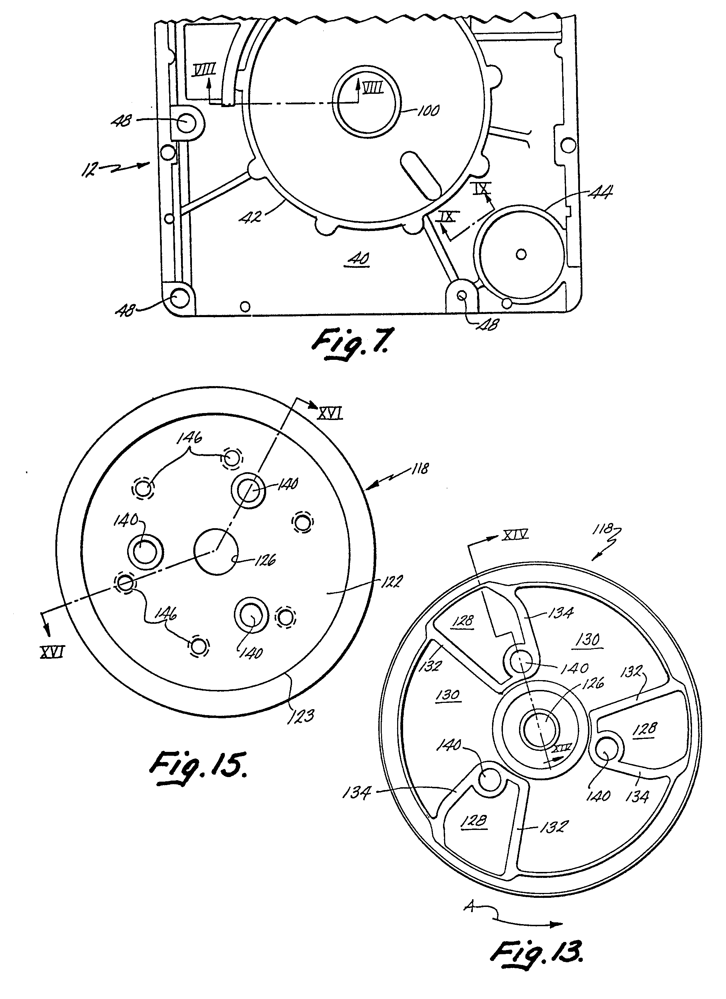

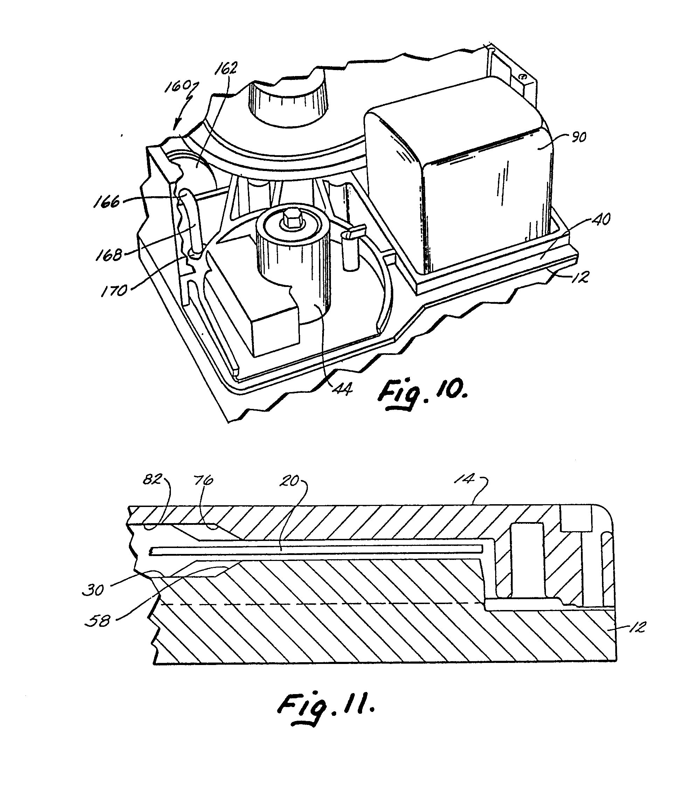

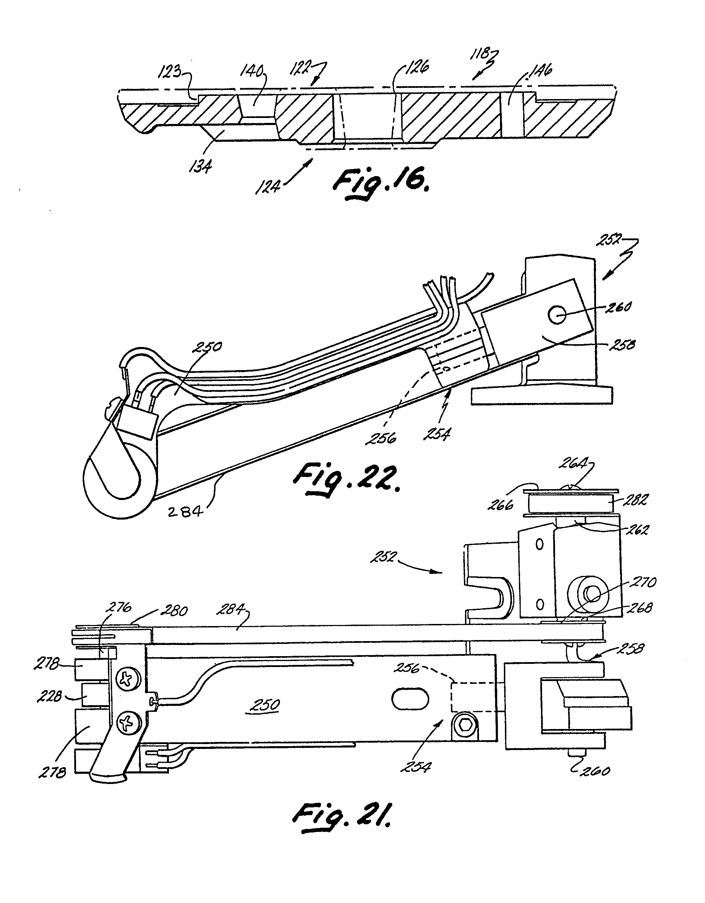

As seen in Figures 7, 9 and 12, the main support frame further defines a spindle support hub 100. Spindle support hub 100 supports a drive spindle 102 which is press fitted within bearing assemblies 104, 106. Hub portion 42 supports motor laminations and windings 108 which are adhesively secured to the frame. After the windings are secured, the spindle and bearings are positioned within hub 100. Next, a motor rotor assembly 112 including magnets 111 and a cap 113 is secured in position. The enclosure 29 within which the disc media 20 rotates is sealed from the spindle 102 by a ferro fluid seal 114. The fluid is held in suspension by the magnetic flux field of the motor. Secured to the spindle 102 within enclosure 29 is a disc hub 118. A disc clamp 120 is bolted to hub 118 and clamps the disc media 20 to the drive hub. As seen in Figure 9, the laminations and windings are wired through a hole 115 in hub 42. Hub 100 defines a vent hole 117.

Figures 13, 14, 15 and 16 illustrate the disc hub
118. As shown therein, disc hub 118 includes a
generally flat upper surface 122 and a machined
shoulder 123. Hub 118 further includes an enlarged,
central hub portion 124 defining a throughbore 126 for
receipt of the drive spindle. Disc hub 118 is press
fitted onto the spindle. The undersurface of the disc
hub further defines a plurality of circumferentially
spaced, flat surface areas 128. Each surface area 128
is adjacent another flat surface area 130. Surfaces
128 join surfaces 130 along sloped areas 132. Extending
radially outwardly along lateral edges of surfaces
128 opposite the sloped portions 132 are vanes 134.
Vanes 134 define a reversed impeller, and each includes
a radial outward portion which is angled in the direction of rotation of the hub. The direction of rotation
is indicated by the arrow A in Figure 13. At the
inner terminal portions of each of the vanes 134, disc
hub 118 defines throughbores or passages 140. As
seen in Figure 12, disc clamp 120 also defines throughbores or passages 142 which are superimposed on
passages 140. As seen in Figures 15 and 16, disc hub
118 defines a bolt hole pattern including a plurality
of bolt holes or apertures 146. Disc hub 118 is
bolted to the disc clamp by suitable fasteners extending through the bolt holes.

During operation of the disc recorder, the disc
media 20 may rotate at speeds on the order of 4,000
RPM. The rotating disc tends to pump air within the
enclosure from the central area of the disc radially outwardly. This natural pumping action tends to create low pressure areas at the central area of the disc and disc hub. The low pressure areas can cause contaminants to leak into the enclosure through any weak portions in the seal or gasket 70 between the cover and main frame.

As the disc rotates, the impeller vanes 134 tend to draw air inwardly towards the central area at the underside of the disc. The impellers sweep or pass by the filter outlet aperture 56 and draw air inwardly and force this air up through passages 140 and 142 of the disc hub and disc clamp structure. The air then moves radially outwardly on the disc surface in a generally spiral fashion towards the filter inlet aperture 52. The rib structures defined by the support frame and the cover are closely spaced from both sides of the disc media (Figure 11). The ribs guide and control the flow of air over the surface of the disc and maintain it close to the disc. The air which is moved by the impeller and the disc also provides a boundary layer for the read/write heads 26 to ride on. The impeller structure and air flow path also tend to pressurize the interior of the enclosure in order to prevent inflow of contaminants should the seal fail.

The general flow path of the air is illustrated in Figures 6 and 18. As shown therein, air passes downwardly through the filter inlet aperture 52 and through the accordian filter material 92. After contaminants are removed by the filter 92, the air then flows upwardly and back into the enclosure 29 through the outlet aperture 56. The impeller will draw the air inwardly to the through apertures or bores 140 and the air will move in a general spiral fashion radially outwardly on the disc media. After traversing the disc, it then returns to the filter inlet aperture 52. Cutouts 66 and 84 of rib structures 64, 80 provide an outlet in the guide structure through which the air passes to the filter inlet aperture 52.

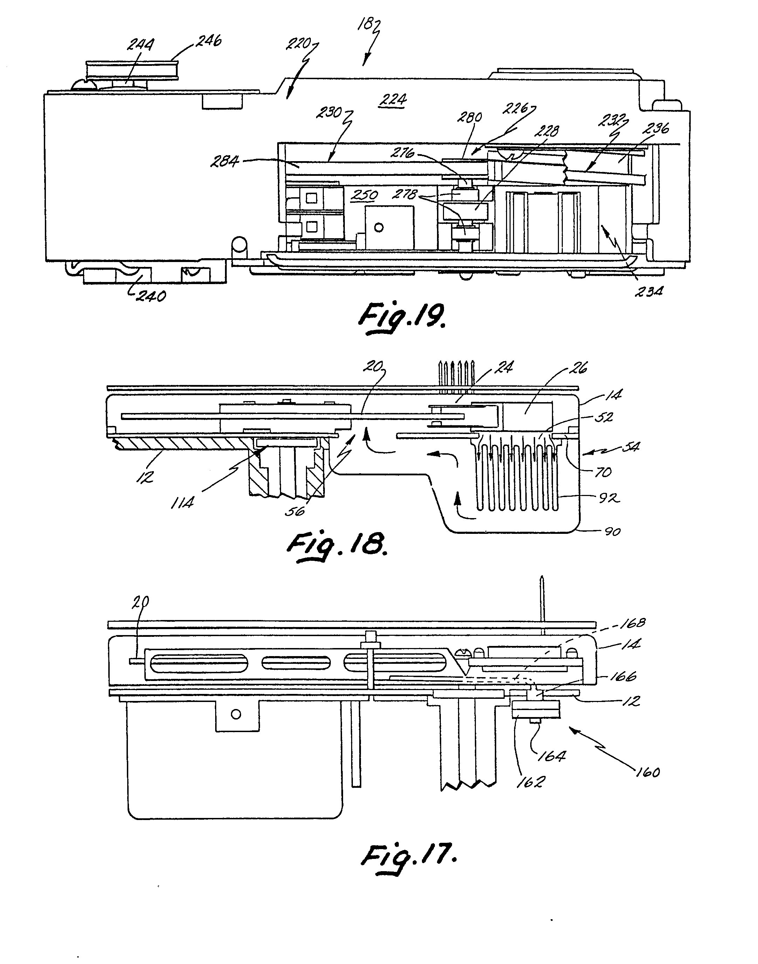

The air flow arrangement can still result in low pressure areas adjacent the central portion of the disc hub. Provision is made for balancing the pressure within the enclosure with atmospheric pressure or the "ambient" pressure which exists outside of the enclosure. As seen in Figure 10 and schematically illustrated in Figure 17, a cross ambient filter 160 is provided.

Filter 160 includes a disc-like cartridge 162 containing a generally flat filter material. In the presently preferred embodiment, the filter material is a glass paper membrane having 99.7% efficiency on .3 $\mu$m particles. Cartridge 162 includes an inlet 164 which is open to atmosphere. Cartridge 162 also includes an outlet 166 which is connected to an elongated tube 168. Tube 168 penetrates the main frame at a sealed aperture 170. As seen in Figures 2 and 6, tube 168 extends radially inwardly towards the central area of the disc along rib 60. As seen in Figure 5, rib 60 is formed with a groove or recess 174 to receive the tube 168.

Tube 168 terminates in an opening 176 immediately adjacent the impeller defined by the vanes 134 on the undersurface of the disc hub. Tube 168, therefore, communicates with a low pressure area near the centre of the disc media and disc hub. The cross ambient filter tends to balance the pressure in this area with atmospheric pressure or the ambient pressure existing outside of the enclosure. The filter may conduct air either towards or away from the central area of the disc. It functions as a pressure balance device which avoids the creation of low pressure areas which would tend to cause leakage at the weakest point in the seal or gasket 70. This prevents high velocity air flow which would bring with it external contaminants.

The cross ambient air filter, the reversed impeller structure and the rib structure ensure that air is pumped within the enclosure, that contaminants are removed and that a layer of air is maintained on the disc surface which would remove any dust or other particles which might collect during periods of non-operation. The disc hub 118, besides integrally providing the impeller structure, as seen in Figure 16, also defines the precisely machined shoulder 123 which accurately positions the disc media. Frame 12 serves to fully position and orient the disc media, the read/write heads and the head positioning arm with its motor structure 28.

The modular cartridge recorder 18 is illustrated in Figures 19 and 20. As shown therein, the recorder 18 includes a cast or moulded cartridge frame 220 which supports all elements of the recorder. The frame 220 defines mounting bosses 222 positioned to overlie corresponding mounting bosses 48 on the main support frame. As seen in Figure 19, the main frame 220 has a front face 224 defining a cartridge aperture 226. Positioned within the aperture 226 to engage the cartridge tape is a tape drive capstan 228 supported on a drive means 230. Also positioned within the opening is a read/write head assembly 232. The read/write head assembly 232 is mounted on a mechanism 234 including a cam 236 which permits the head to track vertically on the tape.

Tape drive means 230, as seen in Figure 20, includes its own drive motor 240 which is bolted to a mounting plate 242. Plate 242 is in turn secured to frame 220. Motor 240 includes an output shaft 244 which non-rotatably supports a drive pulley 246. A capstan support arm 250 is pivoted to frame 220 at a bracket and shaft housing 252. As seen in Figures 21 and 22, one end 254 of arm 250 defines a bore 256 which receives a pivot member 258. Member 258 is pivoted to housing structure 252 by a pivot 260. Housing structure 252 also rotatably supports a shaft 262. Bearings (not shown) within housing 252 position and rotatably mount shaft 262. Secured to one end 264 of shaft 262 is an input pulley 266. Secured to the opposite end 268 of shaft 262 is an output pulley 270.

As seen in Figures 19 and 20, capstan 228 is supported on free end 272 of arm 250 by a shaft 276 which is rotatably supported by bearings 278. An upper end of shaft 276 has a capstan pulley 280 secured thereto.

A first endless, resilient drive belt 282 is secured around the motor output pulley 246 and input pulley 266 on housing assembly 252. A second belt 284 encircles the capstan pulley 280 and the output pulley 270. Pulleys 266, 270 rotate about an axis which coincides with the pivot axis of the arm 250. As a result, the arm may pivot towards and away from the cartridge opening of the recorder and still be driven at a constant speed by motor 240. As shown in Figure 20, a resilient spring 285 may be supported on frame 220 so as to bias arm 250 towards the cartridge opening of the recorder. Recorder 18, therefore, contains its own drive system which is completely separate from the disc drive motor and spindle of the disc recorder portion. The cartridge recorder may be manufactured on an assembly line separate from that used for the disc recorder and bolted to the main frame at a central location. The cartridge recorder is suitably interfaced with the disc recorder through suitable circuitry.

In the completed unit, relatively high disc storage density is achieved. It is preferred that the unit include a servo positioner rather than a stepper motor to position the read/write heads of the disc. In the preferred form, location information is embedded directly onto the disc. A closed loop servo, controlled by a microprocessor, positions the head directly to the correct track, compensates for disc eccentricity and keeps the heads precisely on the track.  Further, the speed of the spindle is preferably regulated to 0.1%.

5. The total package of the described recorder is extremely compact when compared to presently available hard disc recorders.  The dimensions of the unit precisely match the industry standard for mini-floppy disc recorders.  The modular approach to the unit including the hard disc recorder aspects and the bolted on cartridge recorder combine a fixed and removable media in one integral unit.  The die cast main frame accurately positions and supports all elements of the recorder.  The impeller and filtration system ensures that contaminant free air is pumped across the surface of the disc media and that high velocity areas are eliminated or adequately controlled to prevent ingress of contamination.

CLAIMS

1.    An integrated dual data storage device having
both rigid disc recording media (20) and a cartridge
tape media (32), said integrated storage device comprising:  a main support frame (12); a rotary disc
drive means (108, 112) supported on said frame;  a
disc drive hub (118) carrying a rigid disc recording
media (20) and coupled to said disc drive for
rotation thereby;  a read/write head assembly (24)
including a support arm (26);  a head positioner
means (28) supported on said frame (12) and connected
to said support arm for moving said head assembly
from one selected position to another; said main frame
having support structure (100, 44) located and dimensioned to accurately position said disc media and said
read/write head;  a cover (14) sealed to said frame
and enclosing said disc media;  and a cartridge tape
recorder having a cartridge-mounting frame (220)
supported upon said main frame, said cartridge recorder
including a read/write head (232), a rotary tape
drive member (280) and a drive means (240-285)
operatively connected to said rotary tape drive member
for rotatably driving said member;  said main frame
(12), cover (14), disc assembly (118, 108, 112) and
head assembly (24), and said cartridge recorder (32)
together defining a compact, integrated self-supporting
unit; said main support frame (12) having means for
mounting the integrated unit upon external support
means.

2.    An integrated dual data storage device as
claimed in Claim 1 which includes:  an impeller
(134) on said drive hub (118) for moving air along
an undersurface of said disc media, said hub
defining a plurality of apertures (140, 142) through
which air may pass to a top surface of said disc
media;  a filter plenum (190) on said main frame,
said main frame defining a filter inlet aperture (52)
opening into said plenum from an area outside the
periphery of said disc media, said main frame further
defining a filter outlet (56) communicating with said
plenum at an area which is swept by said disc media;
a high-efficiency filter (92) within said plenum in
a flow path between said inlet and outlet apertures;
and cross-ambient filter means (160-176) communicating
an area adjacent said impeller with atmosphere for .
balancing pressure within said enclosure with atmospheric pressure.

3.    An integrated dual data storage device as
claimed in Claim 1 or Claim 2 in which the drive means
for said rotary tape drive member comprises:  an arm
(250) having a free end (272); means (258) connected
to said arm for pivoting said arm to said cartridge
frame; means (278) for rotatably supporting said
rotary drive member on said arm free end (272);  a drive
motor (240) supported on said cartridge frame;  and
belt and pulley means (246, 282, 264, 270, 284, 280)
on said drive motor, said arm, and said rotary tape
drive member for operatively connecting said drive
member to said drive motor.

4.    A disc recorder, comprising:  a main support
frame (12) having a transverse portion defining a
bottom surface and a top surface, said support frame
defining a disc spindle support (100) and spaced
filter inlet (52) and filter outlet (56) apertures
opening through said top and bottom surfaces;  a
disc hub (118);  a spindle (102) and drive means (108,
112) carried on said support frame for rotating said
disc hub;  a cover (14) sealed to said frame, said
cover having an inner surface facing said top surface
and in conjunction therewith defining an enclosure
(29) within which said disc hub rotates;  a filter
plenum (90) connecting said apertures;  a filter (92)
disposed within said plenum;  impeller vanes (134)
on said disc hub positioned to sweep adjacent said
filter outlet aperture, said disc hub having at
least one through-passage (140, 142) disposed so that
said impeller will force air from the outer periphery
of said disc hub generally radially inwardly and
through said through-passage to the top of the disc
hub, said air flowing in a generally spiral-shaped
pattern outwardly from the centre of the hub and to
said filter inlet aperture;  a plurality of superimposed ribs (58, 60, 62; 72, 74, 76) extending generally radially outwardly with respect to the centre
portion of the disc hub, said ribs being located on
said top surface and said cover inner surface, said
ribs extending above and below said disc hub to concentrate and layer said flow of air close to the
surface of a rigid disc media (20) carried on and
rotating with said hub.

5.    A disc recorder as claimed in Claim 4 which
includes:   a filter cartridge (162) supported on
said frame bottom surface and containing a filter
medium, said filter cartridge including an inlet
(164) open to atmosphere;  and an outlet tube (168)
connected to said cartridge, said tube penetrating
(170) said support frame transverse portion, extending
along said top surface and terminating (176) adjacent
said impeller whereby atmospheric pressure may be
directed to a low-pressure area at said disc to raise
such pressure and balance the pressure within said
enclosure with atmospheric pressure.

6.    A disc recorder as claimed in Claim 5 in which
one (60) of said ribs defines a groove (174) and said
outlet tube is disposed at least partially within
said groove.

7.    A disc recorder as claimed in Claim 4 or
Claim 5 or Claim 6 in which said ribs have a generally
truncated V shape in cross section and extend radially
inwardly towards the centre of the disc hub from
points outside the periphery of the disc medium.

8.    A disc recorder as claimed in any of Claims
4 to 7 in which said disc hub includes a plurality of
through-passages (140, 142), each passage positioned
adjacent an inward terminal portion of said impeller
vanes.

9.    A disc recorder as claimed in any of Claims
4 to 8 which includes:  a self-contained tape cartridge recorder (18) secured to said support frame, said cartridge recorder including: a drive motor
(240); a tape drive capstan (228); and means (240-
285) for rotatably supporting said capstan and operatively connecting said capstan to said drive motor.

10. A hard disc recorder including a main support
frame (12) defining a generally transverse support
plane having an upper surface, a cover (14) sealed
to said frame to define an enclosure (29), disc drive
means including a disc hub (118) supporting a disc
media (20) and mounted to said frame for rotating
said hard disc media within said enclosure, disc read/
write heads (24) and head-positioner arm means (26)
within said enclosure for moving said heads across
said disc, characterised by: a main filter plenum
(90) supported by said frame, said frame defining
spaced inlet (52) and outlet (66) apertures opening
through said support plane and into said plenum; filter
material (92) within said plenum and between said inlet
and outlet apertures; an impeller on an underside of
said disc hub, said impeller including a plurality
of vanes (134) configured to move air inwardly
towards the centre of said disc hub, said hub defining
a plurality of openings (140, 142) extending therethrough for transferring air from beneath the disc to
the top of the disc; and cross-ambient filter means
(160-176) communicating said enclosure with atmosphere
'for balancing the pressure within said enclosure with
atmospheric pressure.

11. A hard disc recorder as claimed in Claim 10 which includes: a plurality of ribs (58, 60, 62; 72, 74, 76) within said enclosure and facing each side of said hard disc media for keeping air which is moving across said disc media close to the surface of said disc.

12. A hard disc recorder as claimed in Claim 11 in which said frame and said cover each define a generally circular rib (64, 80), each circular rib having a cutout portion (66, 84), said circular ribs being superimposed with respect to one another and disposed on opposed sides of said disc media.

13. A tape drive for a cartridge recorder, comprising: a frame (220); a drive motor (240) having an output (244) mounted on said frame; an elongated arm (250); shaft means (262) for rotatably mounting one end (254) of said arm to said frame; capstan means (228) including a capstan shaft (276) rotatably mounted on another end (272) of said arm for engaging a tape and driving same; spring means (285) on said frame for biasing said arm towards a front face of said frame; and belt and pulley means (246, 282, 264, 270, 284, 280) for operatively connecting said drive motor output to said capstan shaft.

14. A tape drive as claimed in Claim 13 in which the belt and pulley means comprises: a drive pulley (246) on said motor output; an input pulley (264) on said shaft means (262); an output pulley (270) on said shaft means; a capstan pulley (280) on said capstan shaft; a first endless belt (282) encircling said drive pulley and said input pulley; and a second endless belt (284) encircling said output pulley and said capstan pulley.

Fig.1.

Fig. 3.

Fig. 2.

Fig. 4.

Fig. 5.

Fig. 6.

Fig. 8.

Fig. 9.

3/9

0069545

Fig. 7.

Fig. 15.

Fig. 13.

Fig. 10.

Fig. 11.

Fig.12.

Fig.14.

Fig. 16.

Fig. 22.

Fig. 21.

Fig.19.

Fig.18.

Fig.17.

Fig.20.